# EUROPÄISCHE PATENTSCHRIFT

(11) **EP 4 267 275 B1**
(45) Veröffentlichungstag und Bekanntmachung des Hinweises auf die Patenterteilung: **04.03.2026**
(21) Anmeldenummer: 22769259.7
(22) Anmeldetag: 26.08.2022
(51) Int. Cl.: B01D 45/08, B01D 46/00, B01D 50/20, B05B 14/10

(54) **VORABSCHEIDEEINHEIT**
PRE-SEPARATOR UNIT
UNITÉ DE PRÉ-SÉPARATION

(30) Priorität: 14.09.2021 DE 202021104962 U; 01.12.2021 DE 202021106573 U
(43) Veröffentlichungstag der Anmeldung: 01.11.2023
(73) Patentinhaber: NeuFilter GmbH, 48599 Gronau (DE)
(72) Erfinder: BÖING, Thomas, 48599 Gronau (DE); HENKE, Daniel, 48599 Gronau (DE)
(74) Vertreter: Werner & ten Brink PAe PartGes mbB Bentheim
(86) Internationale Anmeldenummer: PCT/EP2022/073840
(87) Internationale Veröffentlichungsnummer: WO 2023/041311

(56) Entgegenhaltungen:
- CN-U- 209 985 061
- US-A1- 2015 165 359
- US-B1- 8 834 592

## Beschreibung

Die hier vorgeschlagene Neuerung betrifft das technische Gebiet des Abscheidens von mit einem Luftstrom (Rohgasstrom) mitgeführten Partikeln, insbesondere das Abscheiden von mit einem sogenannten Farbnebel als Rohgasstrom mitgeführten Farb- oder Lackpartikeln (Farbnebelabscheidung). Vorrichtungen, nämlich Abscheidevorrichtungen, zu diesem Zweck sind bereits bekannt, zum Beispiel in Form der in der EP 2 532 409 B beschriebenen und dort als Filtermodul bezeichneten Abscheidevorrichtung oder in Form der in der DE 10 2014 003 608 A1 beschriebenen und dort ebenfalls als Filtermodul bezeichneten Abscheidevorrichtung oder in Form der in der CN 209985061 U beschriebenen Vorrichtung.

Aus der CN 209 985 061 U1 sind eine Abscheidevorrichtung und eine zusammen mit der Abscheidevorrichtung verwendbare Vorabscheideeinheit bekannt. Die Vorabscheideeinheit entsteht als Ergebnis eines "Falt- und Steckvorgangs". Es resultiert ein kubischer Körper, der zum Abscheiden von Partikeln ohne strukturelle Verbindung mit der Abscheidevorrichtung vor der Abscheidevorrichtung platziert wird.

Eine Aufgabe der vorgeschlagenen Neuerung besteht darin, eine zusammen mit einer Abscheidevorrichtung gemäß der EP 2 532 409 B oder der DE 10 2014 003 608 A1 oder zusammen mit einer Abscheidevorrichtung gemäß der prioritätsbegründenden DE 20 2021 104 962.6 (Anmeldetag: 14.09.2021; Titel: Abscheidevorrichtung) effizient verwendbare Ergänzung anzugeben, insbesondere eine Ergänzung, welche eine sogenannte Standzeit (die Dauer der Verwendbarkeit) der Abscheidevorrichtung erhöht.

Eine Abscheidevorrichtung, von der die hier vorgeschlagene Neuerung ausgeht, umfasst einen äußeren Rahmen, welcher in seinem Innern ein Abscheideelement oder mehrere Abscheideelemente aufnimmt. Im Betrieb wird eine solche Abscheidevorrichtung von dem mit Partikeln belasteten Rohgasstrom durchströmt. Der äußere Rahmen der Abscheidevorrichtung weist entsprechend jeweils eine großflächige Öffnung für den Eintritt des Rohgasstroms (Einströmöffnung) sowie für den Austritt des Rohgasstroms (Ausströmöffnung) auf.

Die eingangs genannte Aufgabe wird erfindungsgemäß mittels einer Vorrichtung, nämlich einer zum Abscheiden von mit einem Rohgasstrom mitgeführten Partikeln bestimmten Vorabscheideeinheit mit den Merkmalen des Anspruchs 1 gelöst, wobei die Vorabscheideeinheit zumindest ein erstes und ein zweites Teil - ober bei einer speziellen Ausführungsform zumindest einen ersten und einen zweiten Flächenabschnitt, die dem ersten und dem zweiten Teil entsprechen - aufweist, wobei eines der beiden Teile durch Umknicken zweier gegenüberliegender Seiten gebildete seitliche Laschen aufweist, wobei das andere der beiden Teile randständige Ausnehmungen aufweist und wobei die seitlichen Laschen im umgeknickten Zustand in die randständigen Ausnehmungen eingreifen.

Die seitlichen Laschen bilden mit der angrenzenden Fläche des jeweiligen Teils ein L-Profil und dieses verleiht diesem Teil eine erhebliche Stabilität. Indem die seitlichen Laschen in die Ausnehmungen im anderen Teil eingreifen, werden sie im umgeknickten Zustand gehalten. Es ergibt sich so eine Vorabscheideeinheit, die den beim Abscheiden von mit einem Rohgasstrom mitgeführten Partikeln wirkenden Kräften gut widersteht und trotzdem leicht und einfach herzustellen ist. Zu den beim Abscheiden von Partikeln wirkenden Kräften gehören der auf die Vorabscheideeinheit wirkende Druck aufgrund des anströmenden Rohgasstroms (vergleichbar mit dem Winddruck) und das Gewicht abgeschiedener Partikel.

Die eingangs genannte Aufgabe wird erfindungsgemäß auch mittels eines Verfahrens zum Erhalt einer zusammen mit einer Abscheidevorrichtung verwendbaren Vorabscheideeinheit gelöst.

Die Vorabscheideeinheit ist - wie die Abscheidevorrichtung - zum Abscheiden von mit einem Rohgasstrom mitgeführten Partikeln bestimmt. Sie umfasst ein erstes und ein zweites Teil und durch Umknicken zweier gegenüberliegender Seiten eines der beiden Teile werden an diesem seitliche Laschen gebildet. Das andere Teil weist randständige Ausnehmungen auf und die seitlichen Laschen werden im umgeknickten Zustand in diese Ausnehmungen eingesteckt. Ein weiterer Aspekt der hier vorgeschlagenen Neuerung ist ein Verfahren zum Erhalt einer Kombination einer Vorabscheideeinheit wie hier und im Folgenden beschrieben und einer Abscheidevorrichtung. Die Abscheidevorrichtung und die Vorabscheideeinheit sind zum Abscheiden von mit einem Rohgasstrom mitgeführten Partikeln bestimmt. Die Abscheidevorrichtung umfasst einen Rahmen zur Aufnahme zumindest eines Abscheideelements und weist in dem Rahmen zwei Öffnungen - Einströmöffnung, Ausströmöffnung - auf. Zum Erhalt der Kombination der Vorabscheideeinheit und der Abscheidevorrichtung wird die Vorabscheideeinheit mittels in die Einströmöffnung eingeführter Einstecklaschen der Vorabscheideeinheit im Bereich der Einströmöffnung im oder am Rahmen angeordnet.

Vorteilhafte Ausgestaltungen der Erfindung sind Gegenstand der weiteren Ansprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer bevorzugten Ausführungsform der Vorabscheideeinheit sind deren beide Teile einstückig miteinander verbunden, so dass sich anstelle der zuvor einzelnen Teile zwei einstückig miteinander verbundene Flächenabschnitte ergeben. Diese Flächenabschnitte entsprechen aber den Teilen der zweiteiligen Ausführungsform und die Flächenabschnitte werden entsprechend oftmals auch als Teile (erstes Teil, zweites Teil) bezeichnet. Im Falle einer einstückigen Vorabscheideeinheit ist deren Verwendung besonders einfach, weil das Kombinieren zweier unabhängiger Teile entfällt.

Die mit der Anmeldung eingereichten Ansprüche sind Formulierungsvorschläge ohne Präjudiz für die Erzielung weitergehenden Schutzes. Da speziell die Merkmale der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der jeweils in Bezug genommenen Ansprüche unabhängige Gestaltung aufweisen.

Zur Vermeidung unnötiger Wiederholungen gilt für die weitere Beschreibung, dass Merkmale und Details, die im Zusammenhang mit der Abscheidevorrichtung oder der Vorabscheideeinheit beschrieben sind, selbstverständlich auch im Zusammenhang mit und für ein Verfahren zum Erhalt einer zusammen mit einer Abscheidevorrichtung verwendbaren Vorabscheideeinheit sowie ein Verfahren zum Erhalt einer Kombination einer Abscheidevorrichtung und einer Vorabscheideeinheit und umgekehrt gelten. Dementsprechend kann das jeweilige Verfahren auch mittels einzelner oder mehrerer Verfahrensmerkmale fortgebildet sein, die sich auf die Funktion oder die Gestaltung einzelner oder mehrerer Merkmale der Abscheidevorrichtung oder der Vorabscheideeinheit beziehen, und die Abscheidevorrichtung oder der Vorabscheideeinheit können entsprechend durch aufgrund des Verfahrens resultierender Merkmale fortgebildet sein. Folglich gelten Merkmale und Details, die im Zusammenhang mit dem oder einem der Verfahren beschrieben sind, selbstverständlich auch im Zusammenhang mit und für die Abscheidevorrichtung oder die Vorabscheideeinheit und jeweils umgekehrt, so dass bezüglich der Offenbarung zu den einzelnen Aspekten der vorgeschlagenen Neuerung stets wechselseitig Bezug genommen wird bzw. werden kann.

Wie bereits in der prioritätsbegründenden Anmeldung (DE 20 2021 104 962.6) ausgeführt, kommt die Verwendung einer Vorabscheideeinheit wie hier und im Folgenden beschrieben als Ergänzung einer Abscheidevorrichtung und zur Verwendung mit einer Abscheidevorrichtung in Betracht.

Die Vorabscheideeinheit kommt bei einer Anbringung außen an oder zumindest außen vor einer jeweiligen Abscheidevorrichtung zuerst mit einem die jeweilige Abscheidevorrichtung anströmenden Rohgasstrom in Kontakt. Die Vorabscheideeinheit fungiert also in Bezug auf die in Strömungsrichtung des Rohgasstroms hinter (stromabwärts) der Vorabscheideeinheit liegende Abscheidevorrichtung als eingangsseitige oder vorgelagerte Abscheidestufe. Ein Teil der mit dem Rohgasstrom mitgeführten Partikel wird damit bereits an der Vorabscheideeinheit abgeschieden. Dies erhöht die Standzeit der Abscheidevorrichtung. Die beiden Teile der Vorabscheideeinheit oder - bei einer einstückigen Ausführungsform - das die beiden Teile als Flächenabschnitte umfassende einzelne Teil werden bevorzugt flach geliefert. Es ergibt sich damit ein nur sehr geringer Raumbedarf und folglich ergeben sich geringe Transportkosten. Die manuellen Maßnahmen zum Erhalt der Vorabscheideeinheit, nämlich insbesondere Knicken, und zur Anbringung der Vorabscheideeinheit an einer Abscheidevorrichtung sind extrem einfach, können auch von ungelerntem Personal ausgeführt werden und erfordern zudem nur wenig Zeit. Mit ein und derselben Abscheidevorrichtung können nach und nach mehrere der hier vorgeschlagenen Vorabscheideeinheiten verwendet werden, indem nach dem Entfernen einer Vorabscheideeinheit, welche ihre Aufnahmegrenze erreicht hat, diese entfernt wird und eine neue Vorabscheideeinheit an der Abscheidevorrichtung angebracht wird.

Nachfolgend werden Ausführungsbeispiele der Erfindung anhand der Zeichnung näher erläutert. Einander entsprechende Gegenstände oder Elemente sind in allen Figuren mit den gleichen Bezugszeichen versehen.

Die Ausführungsbeispiele sind nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: eine bekannte Abscheidevorrichtung mit einer Einströmöffnung und einer Ausströmöffnung,
- Fig. 2: und
- Fig. 3: zwei zu einer Vorabscheideeinheit kombinierbare Teile in flachem Zustand,
- Fig. 4: und
- Fig. 5: die beiden Teile aus Fig 2 und Fig. 3 in einem miteinander kombinierbaren Zustand,
- Fig. 6: bis
- Fig. 9: eine aus den beiden Teilen gemäß Fig. 2 und Fig. 3 oder Fig. 4 und Fig. 5 gebildete Vorabscheideeinheit,
- Fig. 10: eine Vorabscheideeinheit gemäß Fig. 6 bis Fig. 9 in einem an einer Abscheidevorrichtung angebrachten Zustand,
- Fig. 11: zwei zu einer Vorabscheideeinheit kombinierbare, einstückig miteinander verbundene Teile in flachem Zustand,
- Fig. 12: bis
- Fig. 16: eine mit den beiden Teilen gemäß Fig. 11 gebildete Vorabscheideeinheit,
- Fig. 17: eine Vorabscheideeinheit gemäß Fig. 12 bis Fig. 16 in einem an einer Abscheidevorrichtung angebrachten Zustand und
- Fig. 18: eine Vorabscheideeinheit gemäß Fig. 12 bis Fig. 16 in einem im Vergleich zu der Situation in Fig. 17 in einer anderen Orientierung an einer Abscheidevorrichtung angebrachten Zustand.

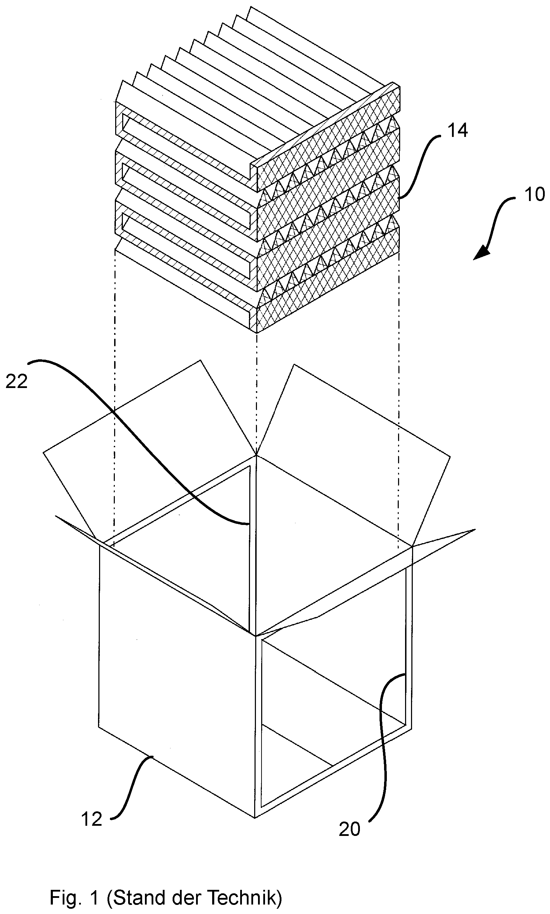

Die Darstellung in Figur 1 zeigt beispielhaft und mittels der Bildelemente der Darstellung in Figur 1 der eingangs genannten EP 2 532 409 B eine Abscheidevorrichtung 10, und zwar in Form einer Momentaufnahme bei deren Herstellung. Eine Abscheidevorrichtung und auch die dargestellte Abscheidevorrichtung 10 umfassen einen äußeren Rahmen 12 und in dem Rahmen 12 zumindest ein Abscheideelement 14. Bei dem Rahmen 12 handelt es sich zum Beispiel um einen herkömmlichen Karton, wie er ansonsten auch für Verpackungs- und/oder Versandzwecke verwendet wird. Das zumindest eine Abscheideelement 14 wird/ist in dem Rahmen 12 platziert. Die strichpunktierten Linien zeigen, wie und wo das Abscheideelement 14 bei der gezeigten Abscheidevorrichtung 10 im Rahmen 12 platziert wird. In der Darstellung in Figur 1 ist der Karton (der Rahmen 12) zwecks Aufnahme des Abscheideelements 14 noch offen. Nach Aufnahme des Abscheideelements 14 wird der Karton (der Rahmen 12) geschlossen, zum Beispiel zugeklebt.

In der EP 2 532 409 B handelt es sich bei dem Abscheideelement 14 um eine mehrfach umgelegte Papiergelegefilterbahn. Auf eine jeweilige Art des Abscheideelements 14 sowie auf eine jeweilige Anzahl von Abscheideelementen 14 kommt es für die hier vorgeschlagene Neuerung ausdrücklich nicht an und entsprechend gilt als Abscheidevorrichtung 10 eine zum Abscheiden von mit einem Luftstrom mitgeführten Partikeln, insbesondere Farbpartikeln, bestimmte Abscheidevorrichtung 10 mit einem äußeren, quaderförmigen Rahmen 12 und zumindest einem darin platzierten Abscheideelement 14.

Der Rahmen 12 der Abscheidevorrichtung 10 fungiert als Gehäuse für das zumindest eine Abscheideelement 14 im Innern des Rahmens 12 (im Innern des Gehäuses). Als Rahmen 12 kommt stets ein Karton wie oben erwähnt oder wie bei der EP 2 532 409 B in Betracht. Bei jeder Erwähnung des Begriffs Rahmen ist entsprechend ein als Rahmen 12 fungierender Karton stets mitzulesen und der Begriff Rahmen umfasst zumindest den Begriff Karton, umfasst aber auch andere Möglichkeiten zur Aufnahme zumindest eines Abscheideelements 14, zum Beispiel eine Kiste aus Holz, Metall, Kunststoff oder dergleichen.

Der Rahmen 12 weist, insbesondere in einander gegenüberliegenden Seitenwänden, zwei großflächige Öffnungen 20, 22 auf. Im Betrieb wird die Abscheidevorrichtung 10 von einem mit Partikeln, zum Beispiel Farbpartikeln, belasteten Luftstrom (Rohgasstrom) durchströmt. Dieser tritt durch eine der Öffnungen 20, 22 in den Rahmen 12 - und damit in die Abscheidevorrichtung 10 insgesamt - ein. Bei dieser Öffnung 20 handelt es sich entsprechend um die Eintrittsöffnung oder Einströmöffnung 20. Der Rohgasstrom tritt durch die andere Öffnung 22 wieder aus dem Rahmen 12 - aus der Abscheidevorrichtung 10 - aus. Bei dieser Öffnung 22 handelt es sich entsprechend um die Austrittsöffnung oder Ausströmöffnung 22. In der Darstellung in Figur 1 laufen die Bezugslinien jeweils zu einer Randlinie dieser Öffnungen 20, 22. Beim Durchströmen der Abscheidevorrichtung 10 tritt der Rohgasstrom durch das zumindest eine Abscheideelement 14 im Innern des Rahmens 12 hindurch, so dass dort in grundsätzlich an sich bekannter Art und Weise eine Abscheidung von mit dem Rohgasstrom mitgeführten Partikeln stattfindet.

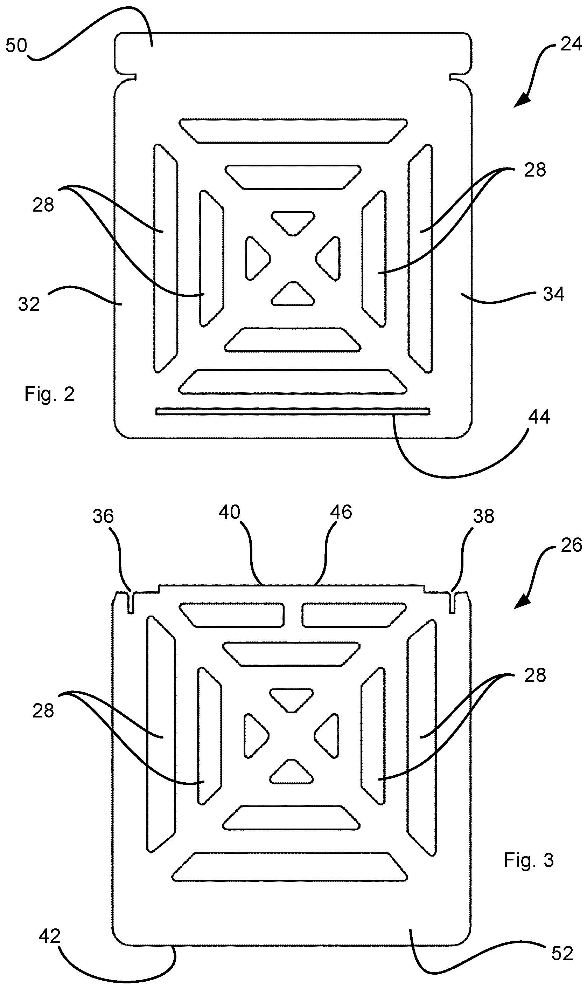

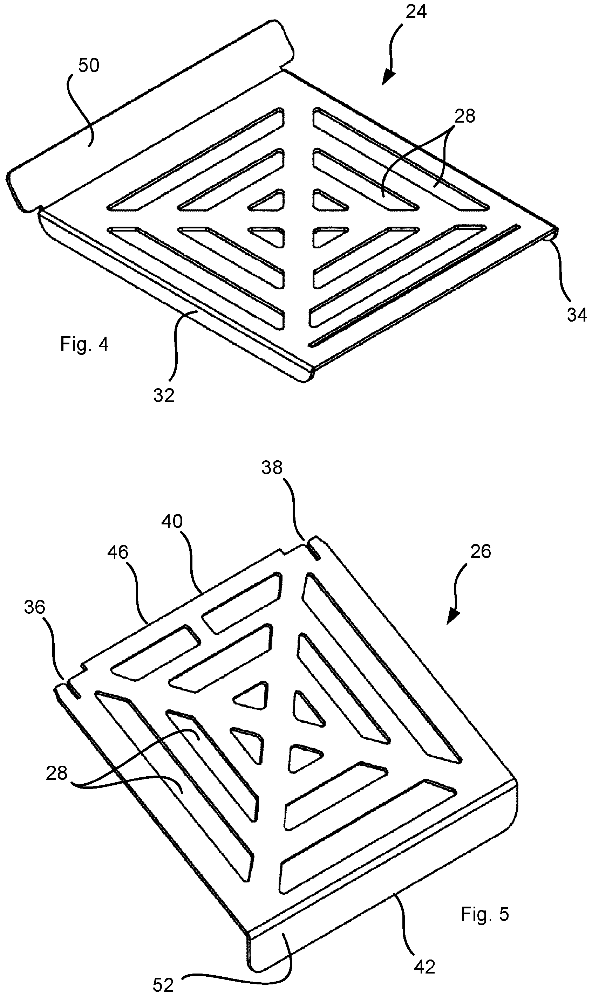

Die Darstellungen in Figur 2 und Figur 3 sowie Figur 4 und Figur 5 zeigen jeweils zwei Vorabscheideeinheitsteile 24, 26. Diese weisen eine rechteckige Form auf. In Figur 2 und Figur 3 sind diese Teile 24, 26 in flachem Zustand gezeigt. In Figur 4 und Figur 5 sind dieselben Teile 24, 26 in einem miteinander kombinierbaren und an einer Abscheidevorrichtung 10 anbringbaren Zustand gezeigt.

Die beiden Teile (Vorabscheideeinheitsteile) 24, 26 sind bevorzugt strukturiert, zum Beispiel indem diese in ihrer Oberfläche eine Mehrzahl von Löchern 28 (nur einzelne bezeichnet) aufweisen. Auf die Anzahl, die Form und/oder die Verteilung der Löcher 28 kommt es nicht an und die Darstellung in den Figuren ist ausdrücklich nur ein Beispiel. Im Falle einer Strukturierung der Teile 24, 26 mittels einer Mehrzahl von Löchern 28 sind die Teile 24, 26 gelocht. Mit anderen Worten: Im Falle einer Strukturierung der Teile 24, 26 mittels einer Mehrzahl von Löchern 28 weisen die Teile 24, 26 aufgrund der Löcher 28 eine gitterartige Form auf, wobei als Löcher 28 - wie beispielhaft gezeigt - Gruppen unterschiedlich großer Löcher 28 in Betracht kommen.

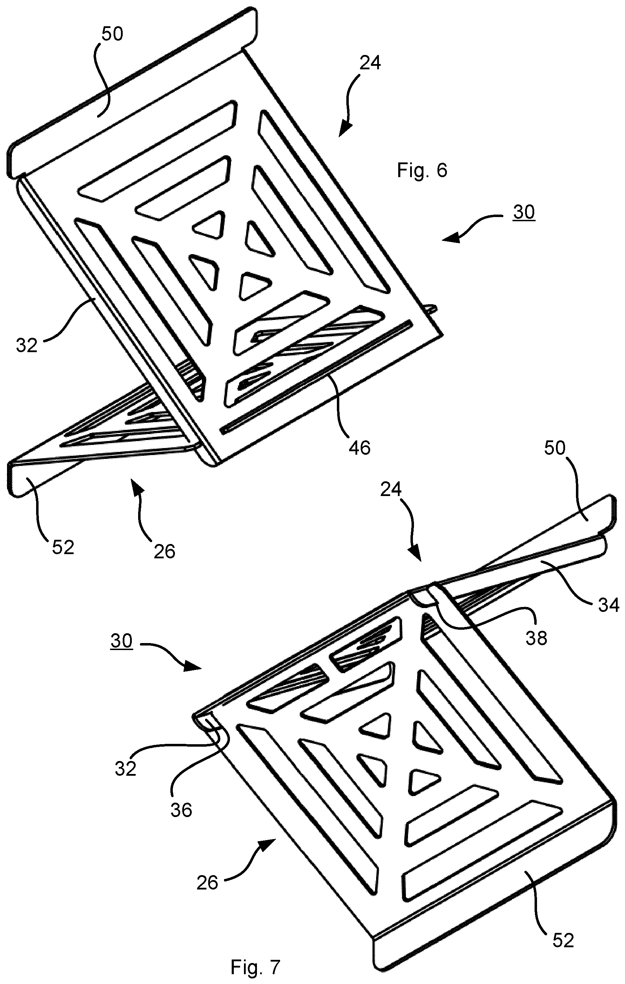

Die beiden Teile 24, 26 sind zu einer Vorabscheideeinheit 30 (Fig. 6) kombinierbar und einzeln oder im kombinierten Zustand am Rahmen 12 einer Abscheidevorrichtung 10 anordenbar und werden/sind zum Erhalt einer Vorabscheideeinheit 30 miteinander kombiniert und einzeln oder im kombinierten Zustand am Rahmen 12 einer Abscheidevorrichtung 10 angeordnet. Das Anordnen am Rahmen 12 erfolgt in und/oder an der Einströmöffnung 20.

Zur Unterscheidung werden die beiden Teile (Vorabscheideeinheitsteile) 24, 26 mitunter als erstes Teil (erstes Vorabscheideeinheitsteil) 24 und als zweites Teil (zweites Vorabscheideeinheitsteil) 26 bezeichnet.

Zum Kombinieren der beiden Teile (Vorabscheideeinheitsteile) 24, 26 werden zwei dafür vorgesehene, gegenüberliegende Seiten eines der beiden Teile 24, 26 (beim Ausführungsbeispiel die gegenüberliegenden Seiten des ersten Teils 24) umgeknickt. Das Umknicken erfolgt um einen Winkel von 90° oder zumindest im Wesentlichen 90° relativ zur verbleibenden Fläche des ersten Teils 24. Aufgrund des Umknickens ergeben sich an den gegenüberliegenden Seiten umgeknickte seitliche Laschen 32, 34 (erste Lasche 32, zweite Lasche 34). In der Darstellung in Figur 4 ist die zweite Lasche 34 durch das erste Teil 24 zum Teil verdeckt. Diese beiden seitlichen Laschen 32, 34 werden beim Kombinieren der beiden Teile 24, 26 in randständige, schlitzartige Ausnehmungen 36, 38 (Fig. 3, Fig. 5) im anderen Teil 26 (beim Ausführungsbeispiel das zweite Teil 26) eingesteckt und sind im miteinander kombinierten Zustand der beiden Teile 24, 26 in diese eingesteckt. Die Ausnehmungen 36, 38 sind randständige Ausnehmungen 36, 38, weil sie von einer der Kanten (der Randlinie) des zweiten Teils 26 ausgehen. Die Ausnehmungen 36, 38 sind optional quer zur angrenzenden Randlinie oder zumindest im Wesentlichen quer zu dieser Randlinie des zweiten Teils 26 orientiert. Die Ausnehmungen 36, 38 können auch als Schlitze bezeichnet werden. Die Kante mit den Ausnehmungen 36, 38 wird zur Bezugnahme als erste Kante 40 bezeichnet. Die gegenüberliegende Kante ist die zweite Kante 42.

Durch das Einstecken in die Ausnehmungen 36, 38 werden/sind die seitlichen Laschen 32, 34 in der umgeknickten Konfiguration fixiert. Die umgeknickten seitlichen Laschen 32, 34 stabilisieren das erste Teil 24. Jede umgeknickte seitliche Lasche 32, 34 bildet mit der angrenzenden Fläche des ersten Teils 24 ein L-Profil und dieses verleiht dem ersten Teil 24 eine erhebliche Stabilität.

Zur Verbesserung der Haltbarkeit der Kombination der beiden Teile 24, 26 sind bevorzugt ein langgestreckter Schlitz 44 in einem der beiden Teile 24 und eine randständige, blattartige Abstellung 46 am anderen Teil 26 vorgesehen. Beim Ausführungsbeispiel weist das Teil 24 mit den seitlichen Laschen 32, 34 (das erste Teil 24) den langgestreckten Schlitz 44 auf, und zwar parallel zu der dem Schlitz 44 nächstliegenden (benachbarten) Kante und nahe an dieser Kante. Entsprechend weist das Teil 26 mit den randständigen Ausnehmungen 36, 38 (das zweite Teil 26) die blattartige Abstellung 46 auf. Der langgestreckte Schlitz 44 befindet sich zwischen der zur Abscheidung von Partikeln bestimmten Strukturierung des Teils 24 und der nächstliegenden Kante, also zwischen dem Bereich mit den Löchern 28 und der dem Schlitz 44 nächstliegenden Kante.

Beim Kombinieren der beiden Teile 24, 26 (beim Einstecken der Laschen 32, 34 in die Ausnehmungen 36, 38) wird die blattartige Abstellung 46 in den langgestreckten Schlitz 44 eingesteckt und im kombinierten Zustand der beiden Teile 24, 26 ist die blattartige Abstellung 46 in den langgestreckten Schlitz 44 eingesteckt. Die blattartige Abstellung 46 greift in den langgestreckten Schlitz 44 ein.

Bei der gezeigten Ausführungsform ergibt sich die blatt- oder federartige Abstellung 46 (blattartig im Sinne eines Schaufelblatts; federartig im Sinne einer Feder einer Nut-Feder-Verbindung) am zweiten Teil 26 und dort im Bereich von dessen erster Kante 40, indem das zweite Teil 26 im Bereich der Ausnehmungen 36, 38 (also im Bereich von dessen Ecken) und in Richtung der Ausnehmungen 36, 38 stückweise gekürzt ist. Zwischen den Kürzungen im Bereich der Ecken verbleibt entlang der ersten Kante 40 ein längerer Abschnitt (länger bei einer Längenmessung entlang des Teils 26 und quer zu dessen erster Kante 40) und dieser Bereich wird als blattartige Abstellung 46 bezeichnet.

Die Darstellungen in Figur 6, Figur 7, Figur 8 und Figur 9 zeigen jeweils zwei miteinander kombinierte Teile 24, 26. Im kombinierten Zustand schließen diese einen Winkel ein und bilden eine Vorabscheideeinheit 30, nämlich eine an einer Abscheidevorrichtung 10 anbringbare Vorabscheideeinheit 30.

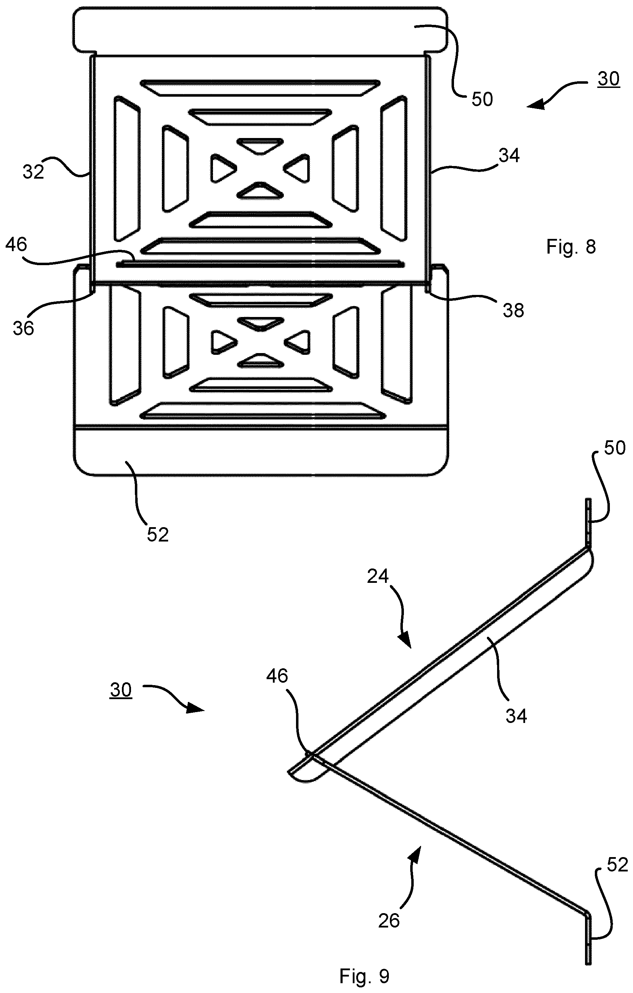

Die Verbindung der beiden Teile 24, 26 besteht im Bereich der Spitze des Winkels. Dort greift die Abstellung 46 in den Schlitz 44 ein. Die Darstellungen in Figur 6 und Figur 7 zeigen isometrische Ansichten der Vorabscheideeinheit 30. Die Darstellungen in Figur 8 und Figur 9 zeigen die Vorabscheideeinheit 30 gemäß Figur 6 und Figur 7 in einer Ansicht von vorne bzw. in einer Seitenansicht.

Zum Verbinden der beiden Teile 24, 26 - einzeln oder in bereits miteinander kombinierter Form - mit dem Rahmen 12 einer Abscheidevorrichtung 10 sind zur Unterscheidung als Einstecklaschen 50, 52 bezeichnete Laschen vorgesehen, nämlich jeweils eine Einstecklasche 50, 52 an jedem der beiden Teile 24, 26. Die Einstecklaschen 50, 52 werden gegen die restliche Oberfläche des jeweiligen Teils 24, 26 umgeknickt, wie dies zum Beispiel in Figur 4 und Figur 5 erkennbar ist.

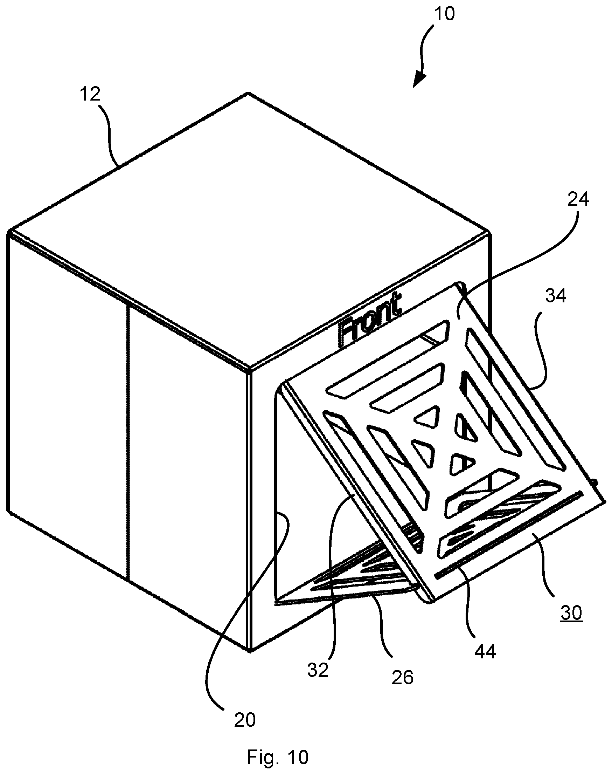

Die Darstellung in Figur 10 zeigt eine Abscheidevorrichtung 10 und eine an der Abscheidevorrichtung 10 angebrachte Vorabscheideeinheit 30, nämlich eine Vorabscheideeinheit 30 gemäß Figur 6 bis Figur 9. Die Vorabscheideeinheit 30 ist an der Abscheidevorrichtung 10 an deren Einströmöffnung 20 angebracht. In der Darstellung in Figur 10 ist die angeströmte Seite der Abscheidevorrichtung 10 mit der Einströmöffnung 20 lediglich zur Orientierung sowie zum Zwecke der Unterscheidung mit dem Text "Front" bezeichnet. Dies gilt auch für entsprechende spätere Darstellungen.

Die weitere Beschreibung befasst sich mit einer vorteilhaften Ausführungsform einer Vorabscheideeinheit 30 wie bisher beschrieben. Die Besonderheit besteht darin, dass diese nicht auf einer Kombination zweier unabhängiger Teile 24, 26 basiert. Vielmehr handelt es sich um ein einstückiges Element. An die Stelle der bisher (Figur 2 bis Figur 9) einzelnen Teile 24, 26 treten jetzt Flächenabschnitte 24, 26 (erster Flächenabschnitt 24, zweiter Flächenabschnitt 26), nämlich einstückig und gelenkig miteinander verbundene Flächenabschnitte 24, 26. Die beiden Flächenabschnitte 24, 26 weisen je für sich genommen im Wesentlichen die Merkmale des zuvor beschriebenen jeweils entsprechenden Teils 24, 26 auf.

Deshalb und zur besseren Lesbarkeit der weiteren Beschreibung werden auch die einstückig und gelenkig miteinander verbundenen Flächenabschnitte 24, 26 im Folgenden als Teile 24, 26 bezeichnet, denn sie bilden jeweils einen Teil der Vorabscheideeinheit 30, sind aber bei der speziellen Ausführungsform einstückig und gelenkig miteinander verbunden. Mit anderen Worten: Der erste Flächenabschnitt 24 ist das erste Teil 24 und umgekehrt und der zweite Flächenabschnitt 26 ist das zweite Teil 26 und ebenfalls umgekehrt.

Für die Flächenabschnitte/Teile 24, 26 der einstückigen Ausführungsform gilt die vorangehende Beschreibung der zweiteiligen Ausführungsform entsprechend, so dass zur Vermeidung von Wiederholungen darauf verwiesen wird. Allerdings sind bei der zweiteiligen Ausführungsform zur Verbindung der beiden einzelnen Teile 24, 26 der Schlitz 44 und die Abstellung 46 vorgesehen. Bei der einstückigen Ausführungsform ist eine Verbindung der Teile 24, 26 nicht notwendig, denn sie besteht bereits aufgrund der Einstückigkeit. Bei der einstückigen Ausführungsform weisen entsprechend die dortigen Flächenabschnitte/Teile 24, 26 keinen derartigen Schlitz 44 und keine derartige Abstellung 46 auf.

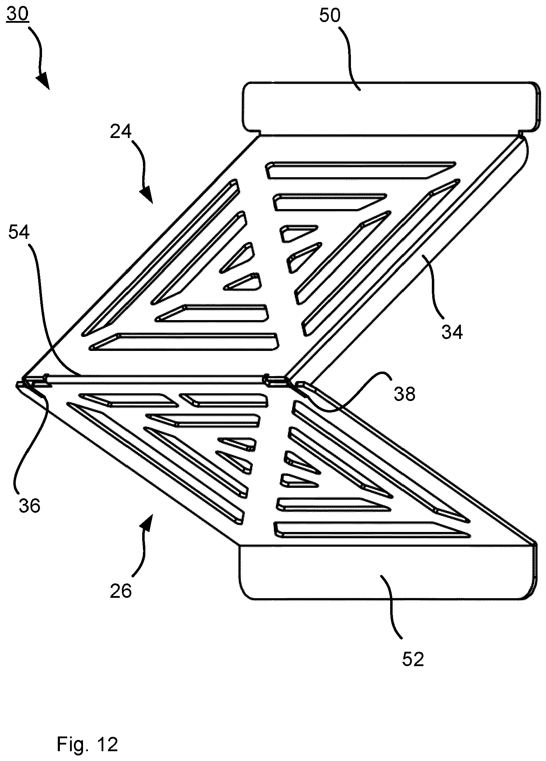

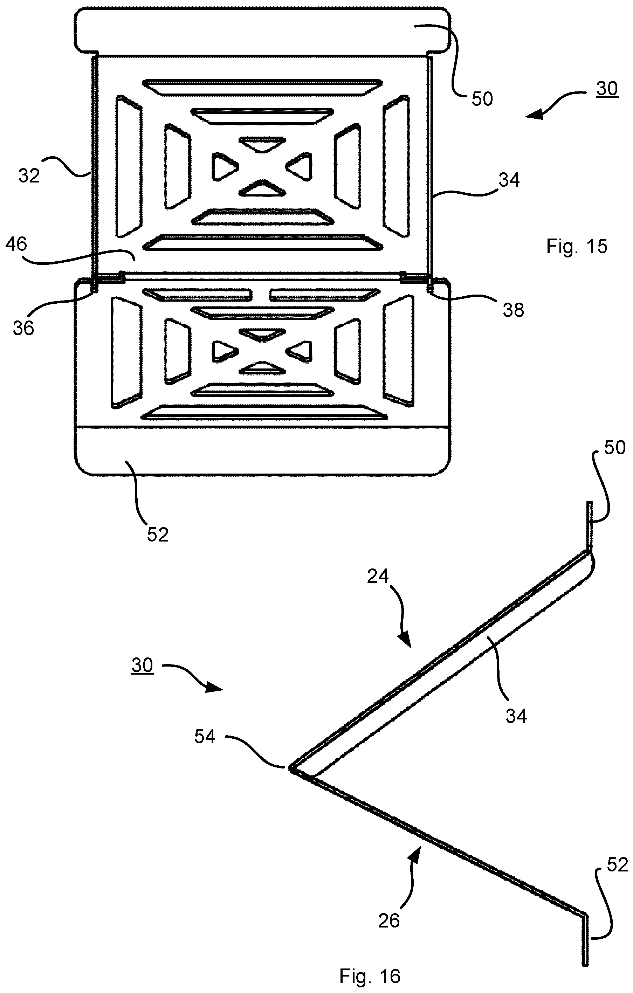

Die gelenkige Verbindung zwischen den beiden Teilen 24, 26 der einstückigen Ausführungsform - den beiden Flächenabschnitten 24, 26 - besteht im Bereich einer Falz 54 (Fig. 12, Fig. 16) oder Falzmarke. Dort wird eines der Teile relativ zu dem anderen Teil umgeknickt. Zum Erhalt einer Vorabscheideeinheit 30 werden - wie oben beschrieben - die seitlichen Laschen 32, 34 umgeknickt und die umgeknickten Laschen 32, 34 in die dafür vorgesehenen Ausnehmungen 36, 38 eingesteckt.

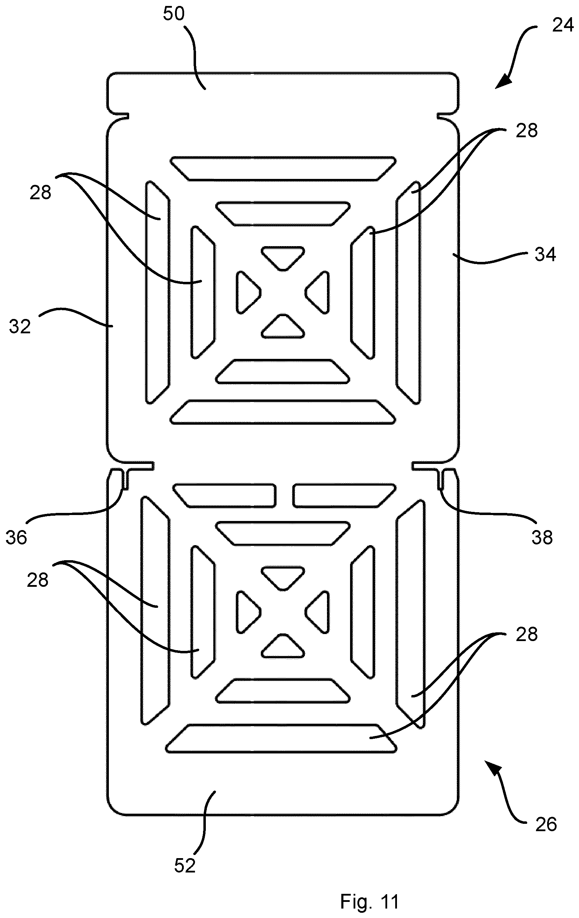

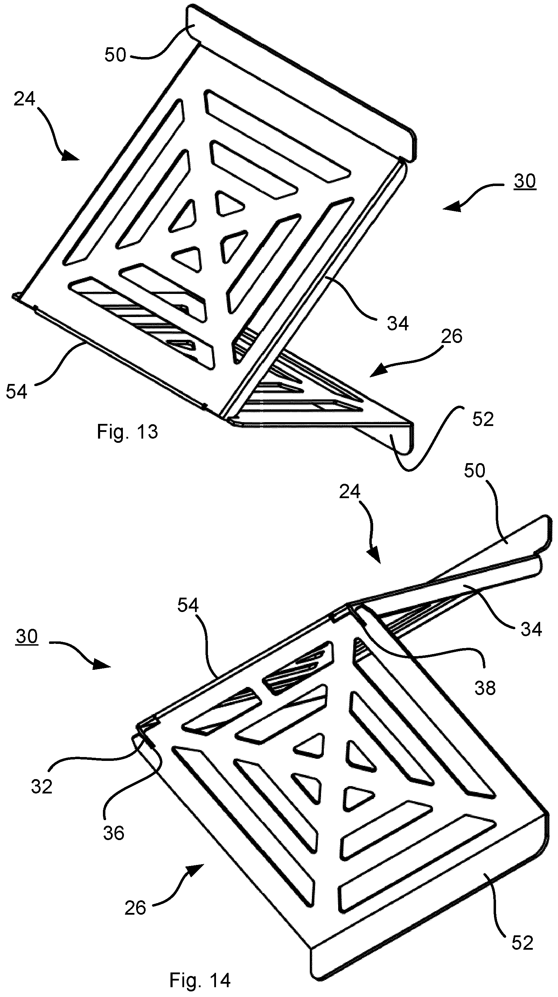

Die Darstellungen in Figur 11, Figur 12, Figur 13, Figur 14 und Figur 15 zeigen - entsprechend der Darstellungen in Figur 6, Figur 7, Figur 8 und Figur 9 - jeweils eine Vorabscheideeinheit 30 mit jeweils zwei einstückig miteinander verbundenen Teilen 24, 26. Die Vorabscheideeinheit 30 ist zur Anbringung an einer Abscheidevorrichtung 10 bestimmt und an einer Abscheidevorrichtung 10 anbringbar. Die Darstellung in Figur 11 zeigt - analog zu den Darstellungen in Figur 2 und Figur 3 - die beiden Teile 24, 26 (die beiden Flächenabschnitte 24, 26) der Vorabscheideeinheit 30. Die Darstellung in Figur 12 zeigt - analog zu den Darstellungen in Figur 4 und Figur 5 - die Teile 24, 26 mit umgeknickten seitlichen Laschen 32, 34 und ebenfalls umgeknickten Einstecklaschen 50, 52. Die Darstellungen in Figur 13 und Figur 14 zeigen - analog zu den Darstellungen in Figur 6 und Figur 7 - isometrische Ansichten der Vorabscheideeinheit 30. Die Darstellungen in Figur 15 und Figur 16 zeigen die Vorabscheideeinheit 30 der Figuren 12, 13 und 14 in einer Ansicht von vorne bzw. in einer Seitenansicht.

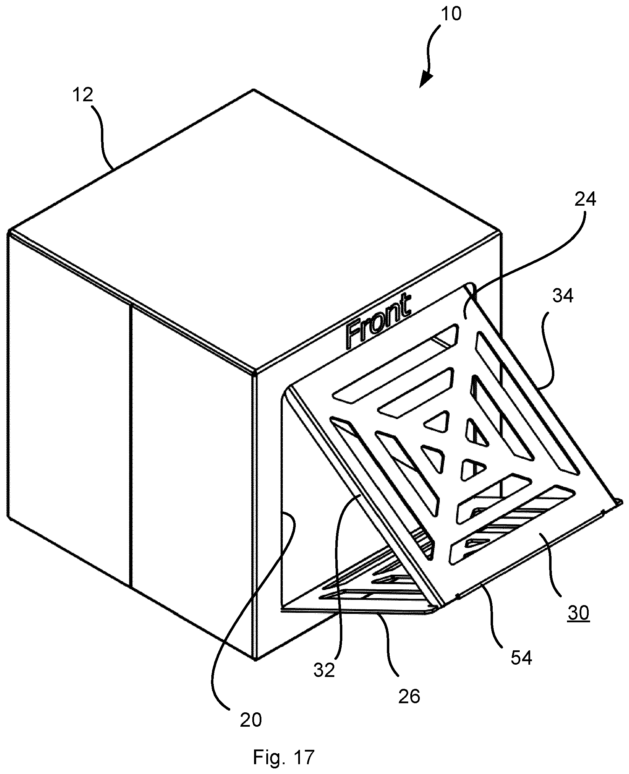

Die Darstellung in Figur 17 zeigt - analog zu der Darstellung in Figur 10 - eine Abscheidevorrichtung 10 und eine an der Abscheidevorrichtung 10 angebrachte Vorabscheideeinheit 30, nämlich eine Vorabscheideeinheit 30 gemäß Figur 12 bis Figur 16. Die Vorabscheideeinheit 30 ist an der Abscheidevorrichtung 10 an deren Einströmöffnung 20 angebracht.

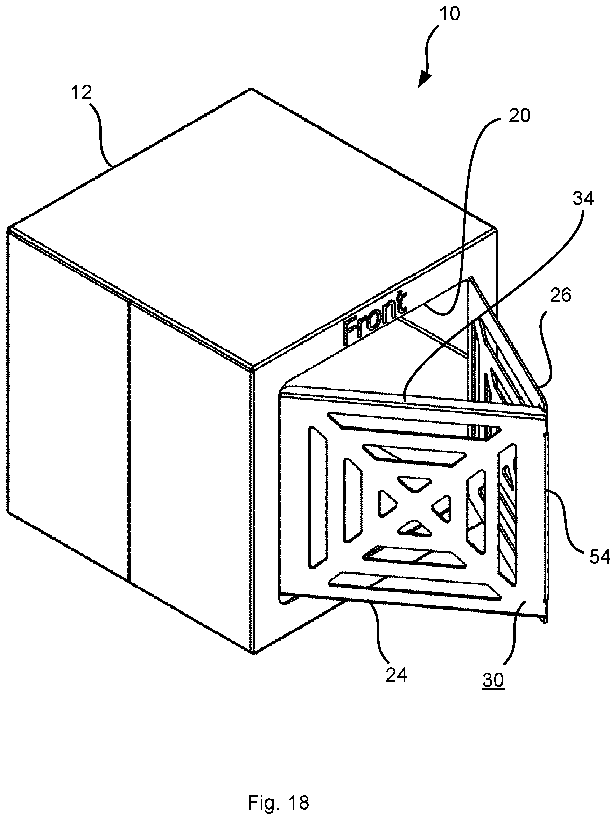

Die Darstellung in Figur 18 zeigt dieselbe Abscheidevorrichtung 10 und dieselbe Vorabscheideeinheit 30 wie die Darstellung in Figur 17. Im Unterschied zu der Darstellung in Figur 17 ist die Vorabscheideeinheit 30 jetzt um 90° gedreht an der Einströmöffnung 20 angebracht. Mit anderen Worten: In der Darstellung in Figur 17 ist die Vorabscheideeinheit 30 so an der Einströmöffnung 20 der Abscheidevorrichtung 10 angebracht, dass eine horizontale Orientierung der Falz 54 resultiert und in der Darstellung in Figur 18 ist die Vorabscheideeinheit 30 so an der Einströmöffnung 20 der Abscheidevorrichtung 10 angebracht, dass eine vertikale Orientierung der Falz 54 resultiert. Diese beiden Anbringungsmöglichkeiten gelten entsprechend auch für die zweiteilige Ausführungsform der Vorabscheideeinheit 30.

Die Verbindung der Vorabscheideeinheit 30 - sowohl in zweiteiliger Form (Figuren 2 bis 10) wie auch in einteiliger Form (Figuren 11 bis 18) - mit dem Rahmen 12 einer jeweiligen Abscheidevorrichtung 10 erfolgt mittels der Einstecklaschen 50, 52. Die Einstecklaschen 50, 52 werden/sind in die Einströmöffnung 20 der Abscheidevorrichtung 10 eingeführt.

Die Darstellungen in Figur 10 und Figur 17 zeigen jeweils eine Situation, bei der die Einstecklaschen 50, 52 im Bereich einer unteren Kante der Einströmöffnung 20 bzw. im Bereich einer oberen Kante der Einströmöffnung 20 in die Einströmöffnung 20 eingeführt sind. Die Darstellung in Figur 18 zeigt eine Situation, bei der die Einstecklaschen 50, 52 im Bereich der seitlichen Kanten der Einströmöffnung 20 in die Einströmöffnung 20 eingeführt sind.

Bevorzugt bewirkt das zumindest eine Abscheideelement 14 im Innern des Rahmens 12 die Halterung der Einstecklaschen 50, 52 am/im Rahmen 12. Besonders bevorzugt bewirkt das zumindest eine Abscheideelement 14 im Innern des Rahmens 12 die Halterung einer der Einstecklaschen 50, 52, insbesondere der Einstecklasche 50 am ersten Teil 24 der Vorabscheideeinheit 30, am/im Rahmen 12 und dort an der oberen Kante der Einströmöffnung 20, also gegen die Gravitationskraft.

Der Rahmen 12 nimmt das zumindest eine Abscheideelement 14 bevorzugt in einem Paßsitz auf. Wenn eine solche Aufnahme in einem Paßsitz gegeben ist, schließt das zumindest eine Abscheideelement 14 zumindest mit einem zunächst geringen Übermaß und einer daraus resultierenden Stauchung des Abscheideelements 14 oder des jeweiligen Abscheideelements 14 zumindest an die Seitenwand des Rahmens 12 mit der Einströmöffnung 20 und die gegenüberliegende Seitenwand an. Dann ist/wird jede in die Einströmöffnung 20 eingeführte und dort zwischen die Innenseite der Seitenfläche des Rahmens 12 mit der Einströmöffnung 20 und dem zumindest einen im Rahmen 12 im Paßsitz aufgenommenen Abscheideelement 14 eingesteckte Einstecklasche 50, 52 dort eingeklemmt. Das Einklemmen erfolgt zwischen der Innenseite der Seitenfläche des Rahmens 12 mit der Einströmöffnung 20 einerseits und dem zumindest einen im Rahmen 12 im Paßsitz aufgenommenen Abscheideelement 14 andererseits. Das Einklemmen erfolgt, indem das zumindest eine im Rahmen 12 im Paßsitz aufgenommene Abscheideelement 14 die jeweilige Einstecklasche 50, 52 gegen die Innenseite der Seitenfläche des Rahmens 12 mit der Einströmöffnung 20 drückt. In dieser Konfiguration ist die eingeklemmte Einstecklasche 50, 52 zumindest in einem für eine Verwendung der Vorabscheideeinheit 30 beim Abscheiden von mit einem Rohgasstrom mitgeführten Partikeln ausreichenden Maße besonders gut fixiert. Speziell gilt dies auch für eine an der oberen Kante der Einströmöffnung 20 eingeführte Einstrecklasche 50, die dort im eingeklemmten Zustand auch gegen die Gravitationskraft gehalten wird.

Zusätzlich oder alternativ zu einer solchen Halterung durch Einklemmen kommt eine Halterung durch Formschluß oder durch Kleben, Heften, Tackern oder dergleichen in Betracht.

Das Einstecken der Einstecklaschen 50, 52 in die Einströmöffnung 20 erfolgt zum Beispiel, bis deren freie Kante jeweils an eine dafür vorgesehene Begrenzung (einen dafür vorgesehenen Anschlag) im Innern des Rahmens 12 stößt. Das Einstecken in die Einströmöffnung 20 erfolgt jedenfalls nur im Umfang der Einstecklaschen 50, 52. Der restliche Teil der Vorabscheideeinheit 30 bleibt/befindet sich außerhalb des Rahmens 12.

Bei der gezeigten Ausführungsform der einstückigen Variante ist der von den beiden Teilen 24, 26 eingeschlossene Winkel ≤ 90°. Bei der gezeigten Ausführungsform der zweiteiligen Variante kann der von den beiden Teilen 24, 26 eingeschlossene Winkel auch > 90° sein. Bei beiden gezeigten Ausführungsformen ist der von den beiden Teilen 24, 26 der Vorabscheideeinheit 30 eingeschlossene Winkel bevorzugt < 90°, besonders bevorzugt liegt der eingeschlossene Winkel in einem Bereich von 60° bis 70°.

Das Anbringen der Vorabscheideeinheit 30 am Rahmen 12 einer jeweiligen Abscheidevorrichtung 10 (und ggf. das vorherige Entfernen einer bereits verwendeten Vorabscheideeinheit 30) erfolgt werkzeuglos oder zumindest im Wesentlichen werkzeuglos, ist auch für ungelerntes Personal ohne Weiteres zu bewerkstelligen und kann in kürzester Zeit erfolgen.

Einzelne im Vordergrund stehende Aspekte der hier eingereichten Beschreibung lassen sich damit kurz wie folgt zusammenfassen: Angegeben werden eine Vorabscheideeinheit 30 und eine Abscheidevorrichtung 10 mit einer solchen Vorabscheideeinheit 30. Die Vorabscheideeinheit 30 und die Abscheidevorrichtung 10 sind zum Abscheiden von mit einem Rohgasstrom mitgeführten Partikeln bestimmt. Die Vorabscheideeinheit 30 erhöht die Standzeit der Abscheidevorrichtung 10. Die Vorabscheideeinheit 30 umfasst zwei einzelne Teile 24, 26 oder - in einer bevorzugten Ausführungsform - zwei einstückig und gelenkig miteinander verbundene Teile 24, 26. Die beiden Teile 24, 26 werden/sind zu einer Vorabscheideeinheit 30 kombiniert bzw. kombinierbar und die Vorabscheideeinheit 30 ist im Bereich der Einströmöffnung 20 an einem Rahmen 12 der Abscheidevorrichtung 10 anordenbar bzw. angeordnet.

### Bezugszeichenliste

- 10: Abscheidevorrichtung
- 12: Rahmen
- 14: Abscheideelement
- 16,18: (frei)
- 20: Öffnung, Einströmöffnung (im Rahmen 12)
- 22: Öffnung, Ausströmöffnung (im Rahmen 12)
- 24: (erstes) Vorabscheideeinheitsteil, (erstes) Teil, (erster) Flächenabschnitt jeweils der Vorabscheideeinheit 30
- 26: (zweites) Vorabscheideeinheitsteil, (zweites) Teil, (zweiter) Flächenabschnitt jeweils der Vorabscheideeinheit 30
- 28: Loch
- 30: Vorabscheideeinheit
- 32: seitliche Lasche (am ersten Teil 24)
- 34: seitliche Lasche (am ersten Teil 24)
- 36: randständige Ausnehmung (am zweiten Teil 26)
- 38: randständige Ausnehmung (am zweiten Teil 26)
- 40: erste Kante
- 42: zweite Kante
- 44: Schlitz
- 46: Abstellung
- 48: (frei)
- 50: Einstecklasche
- 52: Einstecklasche
- 54: Falz

## Patentansprüche

1. Vorabscheideeinheit (30) umfassend ein erstes und ein zweites Vorabscheideeinheitsteil (24, 26),
wobei die Vorabscheideeinheit (30) zum Abscheiden von mit einem Rohgasstrom mitgeführten Partikeln bestimmt ist,
wobei eines der beiden Vorabscheideeinheitsteile (24) seitliche Laschen (32, 34) in Form umgeknickter gegenüberliegender Seiten des Vorabscheideeinheitsteils (24) aufweist, die mit der angrenzenden Fläche des Vorabscheideeinheitsteils (24) jeweils L-Profile bilden,
wobei das andere Vorabscheideeinheitsteil (26) von einer Randlinie des Vorabscheideeinheitsteils (26) ausgehende Ausnehmungen (36, 38) aufweist und
wobei bei miteinander verbundenen Vorabscheideeinheitsteilen (24, 26) die seitlichen Laschen (32, 34) im umgeknickten Zustand in die Ausnehmungen (36, 38) eingreifen und die beiden miteinander verbundenen Vorabscheideeinheitsteile (24, 26) einen Winkel < 90° einschließen.

2. Vorabscheideeinheit (30) nach Anspruch 1,
wobei die beiden Vorabscheideeinheitsteile (24, 26) einstückig miteinander verbunden und entlang einer Falz (54) im Verbindungsbereich umgeknickt sind.

3. Vorabscheideeinheit (30) nach Anspruch 1 oder 2,
mit jeweils einer Einstecklasche (50, 52) an jedem der Vorabscheideeinheitsteile (24, 26) zum Anbringen der Vorabscheideeinheit (30) an einer Abscheidevorrichtung (10).

4. Abscheidevorrichtung (10) zum Abscheiden von mit einem Rohgasstrom mitgeführten Partikeln und mit einer Vorabscheideeinheit (30) nach einem der vorangehenden Ansprüche.

5. Abscheidevorrichtung (10) nach Anspruch 4 und mit einem Rahmen (12) zur Aufnahme zumindest eines Abscheideelements (14) sowie zwei Öffnungen (20, 22) - Einströmöffnung (20), Ausströmöffnung (22) - im Rahmen (12),
wobei die Vorabscheideeinheit (30) im Bereich der Einströmöffnung (20) im oder am Rahmen (12) angeordnet ist.

6. Abscheidevorrichtung (10) nach Anspruch 5 und mit zumindest einem im Rahmen (12) der Abscheidevorrichtung (10) in einem Paßsitz aufgenommenen Abscheideelement (14),
wobei das Abscheideelement (14) oder zumindest ein Abscheideelement (14) in die Einströmöffnung (20) eingeführte Einstecklaschen (50, 52) der Vorabscheideeinheit (30) im Innern des Rahmens (12) einklemmt.

7. Verwendung einer Abscheidevorrichtung (10) nach einem der Ansprüche 4, 5 oder 6 zusammen mit einer damit kombinierten Vorabscheideeinheit (30) nach einem der Ansprüche 1, 2 oder 3 zum Abscheiden von mit einem Rohgasstrom mitgeführten Partikeln.

8. Verfahren zum Erhalt einer zusammen mit einer Abscheidevorrichtung (10) verwendbaren Vorabscheideeinheit (30),
wobei die Vorabscheideeinheit (30) zum Abscheiden von mit einem Rohgasstrom mitgeführten Partikeln bestimmt ist und ein erstes und ein zweites Vorabscheideeinheitsteil (24, 26) umfasst,
wobei durch Umknicken zweier gegenüberliegender Seiten eines der beiden Vorabscheideeinheitsteile (24) an diesem seitliche Laschen (32, 34) gebildet werden, die mit der angrenzenden Fläche des Vorabscheideeinheitsteils (24) jeweils L-Profile bilden"
wobei das andere Vorabscheideeinheitsteil (26) von einer Randlinie des Vorabscheideeinheitsteils (26) ausgehende Ausnehmungen (36, 38) aufweist und
wobei die seitlichen Laschen (32, 34) im umgeknickten Zustand in die Ausnehmungen (36, 38) eingesteckt werden und die beiden miteinander verbundenen Vorabscheideeinheitsteile (24, 26) einen Winkel < 90° einschließen.

9. Verfahren zum Erhalt einer Kombination einer Vorabscheideeinheit (30) nach einem der Ansprüche 1, 2 oder 3 und einer Abscheidevorrichtung (10),
wobei die Abscheidevorrichtung (10) und die Vorabscheideeinheit (30) zum Abscheiden von mit einem Rohgasstrom mitgeführten Partikeln bestimmt sind,
wobei die Abscheidevorrichtung (10) einen Rahmen (12) zur Aufnahme zumindest eines Abscheideelements (14) umfasst sowie zwei Öffnungen (20, 22) - Einströmöffnung (20), Ausströmöffnung (22) - im Rahmen (12) aufweist,
wobei die Vorabscheideeinheit (30) mittels in die Einströmöffnung (20) eingeführter Einstecklaschen (50, 52) der Vorabscheideeinheit (30) im Bereich der Einströmöffnung (20) im oder am Rahmen (12) angeordnet wird.

10. Verfahren nach Anspruch 9,
wobei das zumindest eine Abscheideelement (14) im Rahmen (12) der Abscheidevorrichtung (10) in einem Paßsitz aufgenommen wird und
wobei das Abscheideelement (14) oder zumindest ein Abscheideelement (14) die in die Einströmöffnung (20) eingeführten Einstecklaschen (50, 52) im Innern des Rahmens (12) einklemmt.

## Claims

1. Pre-separation unit (3) comprising a first and a second pre-separation unit component (24, 26),
wherein the pre-separation unit (30) is designed for the separation of particles carried along in a raw gas stream,
wherein one of the two pre-separation unit components (24) has lateral tabs (32, 34) in the form of folded-over opposing sides of the pre-separation unit component (24), which respectively form L-shaped profiles with the adjacent surfaces of the pre-separation unit component (24),
wherein the other pre-separation unit component (26) has recesses (36, 38) extending from an edge line of the pre-separation unit component (26), and
where, with interconnected pre-separation unit components (24, 26), the lateral tabs (32, 34), when folded over, engage in the recesses (36, 38) and the two interconnected pre-separation unit components (24, 26) form an angle of < 90°.

2. The pre-separation unit (30) according to claim 1,
wherein both the pre-separation unit components (24, 26) are joined together in one piece and are folded over along a fold (54) in the joining area.

3. The pre-separation unit (30) according to claim 1 or 2,
with an insertion tab (50, 52) on each of the pre-separation unit components (24, 26) for attaching the pre-separation unit (30) to a separation device (10).

4. Separation device (10) for separating particles carried along with a raw gas stream and with a pre-separation unit (30) according to one of the preceding claims.

5. The separation device (10) according to claim 4 and with a frame (12) for receiving at least one separation element (14) and two openings (20, 22), an inlet opening (20) and an outlet opening (22), in the frame (12),
wherein the pre-separation unit (30) is arranged in or on the frame (12) in the area of the inlet opening (20).

6. The separation device (10) according to claim 5, and with at least one separation element (14) received into a fitted seat in the frame (12) of the separation device (10),
wherein the separation element (14), or at least one separation element (14), clamps the insertion tabs (50, 52) of the pre-separation unit (30) inserted into the inlet opening (20) inside of the frame (12).

7. Use of a separation device (10) according to one of claims 4, 5 or 6, together with a pre-separation unit (30), according to claims 1, 2 or 3, combined therewith, for separating of particles carried along with a raw gas stream.

8. Method for obtaining a pre-separation unit (30) usable together with a separation device (10),
wherein the pre-separation unit (30) is designed for separating particles carried along with a raw gas stream and comprises a first and a second pre-separation unit component (24, 26),
wherein lateral tabs (32, 34) are formed on one of the two pre-separation unit components (24) by folding over two opposing sides of said pre-separation unit component (24), which together with the adjacent surface of the pre-separation unit component (24) form every L-shaped profile,
wherein the other pre-separation unit component (26) has recesses (36, 38) extending from an edge line of pre-separation unit component (26), and
wherein lateral tabs (32, 34), in the folded state, are inserted into the recesses (36, 38), and the two connected pre-separation unit components (24, 26) form an angle < 90°.

9. Method for obtaining a combination of a pre-separation unit (30) according to one of claims 1, 2 or 3, and a separation device (10),
wherein the separation device (10) and the pre-separation unit (30) are designed for separating particles carried along with a raw gas stream,
wherein the separation device (10) comprises a frame (12) for receiving at least one separation element (14) and having two openings (20, 22), inlet opening (20), outlet opening (22), in the frame (12),
wherein the pre-separation unit (30) is arranged in or on the frame (12) by means of insertion tabs (50, 52) of the pre-separation unit (30) in the area of the inlet opening (20).

10. The method according to claim 9,
wherein the at least one separating element (14) is received in a fitted seat in the frame (12) of the separating device (10), and
wherein the separating element (14), or the at least one separating element (14), clamps the insertion tabs (50, 52) inserted into the inlet opening (20) within the frame (12).

## Revendications

1. Unité de pré-séparation (30) comprenant une première et une deuxième partie d'unité de pré-séparation (24, 26),
dans laquelle l'unité de pré-séparation (30) est destinée à séparer des particules entraînées dans un flux de gaz brut,
dans laquelle l'une des deux parties d'unité de pré-séparation (24) présente des languettes latérales (32, 34) sous la forme de côtés opposés rabattus de la partie d'unité de pré-séparation (24) qui constituent avec la surface adjacente de la partie d'unité de pré-séparation (24) des profilés en L, respectivement,
dans laquelle l'autre partie d'unité de pré-séparation (26) présente des évidements (36, 38) partant d'une ligne de bord de la partie d'unité de pré-séparation (26), et
dans laquelle, lorsque les parties de pré-séparation (24, 26) sont reliées ensemble, les languettes latérales (32, 34) à l'état rabattu viennent en prise dans les évidements (36, 38), et les deux parties d'unité de pré-séparation (24, 26) reliées ensemble forment un angle < 90°.

2. Unité de pré-séparation (30) selon la revendication 1,
dans laquelle les deux parties d'unité de pré-séparation (24, 26) sont reliées ensemble d'un seul tenant et sont rabattues le long d'une rainure (54) dans la zone de liaison.

3. Unité de pré-séparation (30) selon la revendication 1 ou 2,
comprenant respectivement une languette d'insertion (50, 52) sur chacune des parties d'unité de pré-séparation (24, 26) pour rattacher l'unité de pré-séparation (30) à un dispositif de séparation (10).

4. Dispositif de séparation (10) permettant de séparer des particules entraînées dans un flux de gaz brut et comprenant une unité de pré-séparation (30) selon l'une quelconque des revendications précédentes.

5. Dispositif de séparation (10) selon la revendication 4 et comprenant un cadre (12) pour recevoir au moins un élément de séparation (14) ainsi que deux ouvertures (20, 22) - une ouverture d'entrée (20) et une ouverture de sortie (22) - dans le cadre (12),
dans lequel l'unité de pré-séparation (30) est disposée au niveau de l'ouverture d'entrée (20) dans ou sur le cadre (12).

6. Dispositif de séparation (10) selon la revendication 5 et comprenant au moins un élément de séparation (14) reçu en ajustement fin dans le cadre (12) du dispositif de séparation (10),
dans lequel l'élément de séparation (14) ou au moins un élément de séparation (14) vient serrer à l'intérieur du cadre (12) des languettes d'insertion (50, 52) de l'unité de pré-séparation (30), introduites dans l'ouverture d'entrée.

7. Utilisation d'un dispositif de séparation (10) selon l'une quelconque des revendications 4, 5 ou 6 en conjonction avec une unité de pré-séparation (30) combinée selon l'une quelconque des revendications 1, 2 ou 3, combinée avec celui-ci, pour séparer des particules entraînées dans un flux de gaz brut.

8. Procédé permettant d'obtenir une unité de pré-séparation (30) utilisable en conjonction avec un dispositif de séparation (10),
dans lequel l'unité de pré-séparation (30) est destinée à séparer des particules entraînées dans un flux de gaz brut et comprend une première et une deuxième partie d'unité de pré-séparation (24, 26),
dans lequel, en rabattant deux côtés opposés d'une des deux parties d'unité de pré-séparation (24) au niveau de celui-ci, des languettes latérales (32, 34) sont formées qui constituent avec la surface adjacente de la partie d'unité de pré-séparation (24) des profilés en L, respectivement,
dans lequel l'autre partie d'unité de pré-séparation (26) présente des évidements (36, 38) partant d'une ligne de bord de la partie d'unité de pré-séparation (26), et
dans lequel les languettes latérales (32, 34) à l'état rabattu sont insérées dans les évidements (36, 38), et les deux parties d'unité de pré-séparation (24, 26) reliées ensemble forment un angle < 90°.

9. Procédé permettant d'obtenir une combinaison d'une unité de pré-séparation (30) selon l'une quelconque des revendications 1, 2 ou 3 et d'un dispositif de séparation (10),
dans lequel le dispositif de séparation (10) et l'unité de pré-séparation (30) sont destinés à séparer des particules entraînées dans un flux de gaz brut,
dans lequel le dispositif de séparation (10) comprend un cadre (12) pour recevoir au moins un élément de séparation (14) ainsi que deux ouvertures (20, 22) - une ouverture d'entrée (20) et une ouverture de sortie (22) - dans le cadre (12),
dans lequel l'unité de pré-séparation (30) est disposée au niveau de l'ouverture d'entrée (20) dans ou sur le cadre (12) au moyen de languettes d'insertion (50, 52) de l'unité de pré-séparation (30), insérées dans l'ouverture d'entrée (20) .

10. Procédé selon la revendication 9,
dans lequel ledit au moins un élément de séparation (14) est reçu en ajustement fin dans le cadre (12) du dispositif de séparation (10), et
dans lequel l'élément de séparation (14) ou au moins un élément de séparation (14) vient serrer à l'intérieur du cadre (12) les languettes d'insertion (50, 52) introduites dans l'ouverture d'entrée (20).
